(19)

Europäisches
Patentamt
European
Patent Office
Office européen
des brevets

(11) **EP 3 960 274 A1**

(12) **EUROPEAN PATENT APPLICATION**

(43) Date of publication:
**02.03.2022 Bulletin 2022/09**

(21) Application number: **20193505.3**

(22) Date of filing: **28.08.2020**

(51) International Patent Classification (IPC):
**B01D 53/04** $^{(2006.01)}$

(52) Cooperative Patent Classification (CPC):
**B01D 53/0407; B01D 53/0415; B01D 53/0454;**
B01D 2253/102; B01D 2256/10; B01D 2257/504;
B01D 2257/556; B01D 2257/708; B01D 2258/06;
B01D 2259/40096

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Universiteit Antwerpen
2000 Antwerpen (BE)**

(72) Inventors:
• **DENYS, Siegfried
B-9700 Oudenaarde (BE)**
• **ROEGIERS, Jelle
B-9960 Assenede (BE)**

(74) Representative: **IPLodge bv
Technologielaan 9
3001 Heverlee (BE)**

(54) **ACTIVATED CARBON FIBRE FILTER**

(57) A regenerable gas filter comprising a housing having in-line an entrance and an exit, a pleated activated carbon fibre sheet or tube, each pleat having two substantially rectangular elements, with electrical conductors in the tip of each pleat and further electrical conductors being optionally attached to the ends of said sheet, said conductors being disposed substantially perpendicularly to the gas flow through said housing and said conductors on one side of said pleated sheet being connected to a single central conductor, which in turn was coupled to an electrical DC power source, this being repeated for the conductors on the other side of said pleated sheet, said sheet being stretched over and in electrical contact with said conductors and said pleated sheet or tube being provided with a sealing means to said housing; and the use the regenerable gas filter for the purification of air in a Heating, Ventilation and Air Conditioning (HVAC) system.

**EP 3 960 274 A1**

**FIGURE 6**

**Description**

**Technical field of the invention**

The present invention relates to an activated carbon fibre filter for example for indoor air purification.

**Background of the invention**

In 2001, Subremat et al. in Carbon, volume 39, pages 707-716 reported the desorption by Joule effect heating of volatile organic compounds (VOCs) adsorbed on activated carbon cloth and established that the electrical resistance of activated carbon cloth could be determined from the geometrical size of the piece and the electrical resistivity of the fabric.

In 2009 Yao et al. in Journal of the Air & Waste Management Association, volume 59, pages 31-36 reported the application of activated carbon fibre cloth (ACFC) as a regenerative adsorbent for the removal of VOCs from indoor air, with single layer ACFC exhibiting remarkable adsorption and regenerative properties using 100 parts per billion by volume (ppbv) toluene as the indoor contaminant. They also reported that Joule heating regeneration of the ACFC was rapid and showed very good performance even after 300 heating and cooling cycles.

In 2019 Roegiers et al. in Chemical Engineering Journal, volume 365, pages 80-87 reported the investigation of activated carbon fibers for indoor air purification by means of pressure drop and adsorption capacity, the Darcy-Forchheimer law combined with Computational Fluid Dynamics (CFD) modelling being deployed to simulate the pressure drop over an FM10 (Calgon Corp) activated carbon fiber cloth (ACFC) filter disposed perpendicularly to the air flow with varying filter thickness (single layer, two layer, three layer and four layer) and Joule effect heating to 150°C in combination with a clean air flow of 2000 cm$^3$/min being used to regenerate the filter by desorbing the acetaldehyde used as a model pollutant.

WO 2017/140967A1 discloses a regenerable filter comprising: a filtering matrix, adapted to allow the circulation of a flow of fluid therein, from an inlet to an outlet of said filter matrix, so as to filter said fluid, and at least one heating element comprising at least a first and a second electrode, positioned at a defined distance from each other and connected to each other via a conductive material, said conductive material being a positive temperature coefficient material, adapted to function as a heating resistor and allow the electrical connection to be cut between said first and second electrodes when the temperature of said conductive material reaches a threshold temperature; a method for regenerating said filter and the use of said method. Figure 1 thereof shows schematically how the first and second electrodes may be arranged on said conductive material, Figure 2 shows such an arrangement with a support for said conductive material, Figure 3 shows two heating elements sandwiching said filtering matrix and Figure 5 shows a pleated filtering matrix sandwiched between heating elements.

**Summary of the invention**

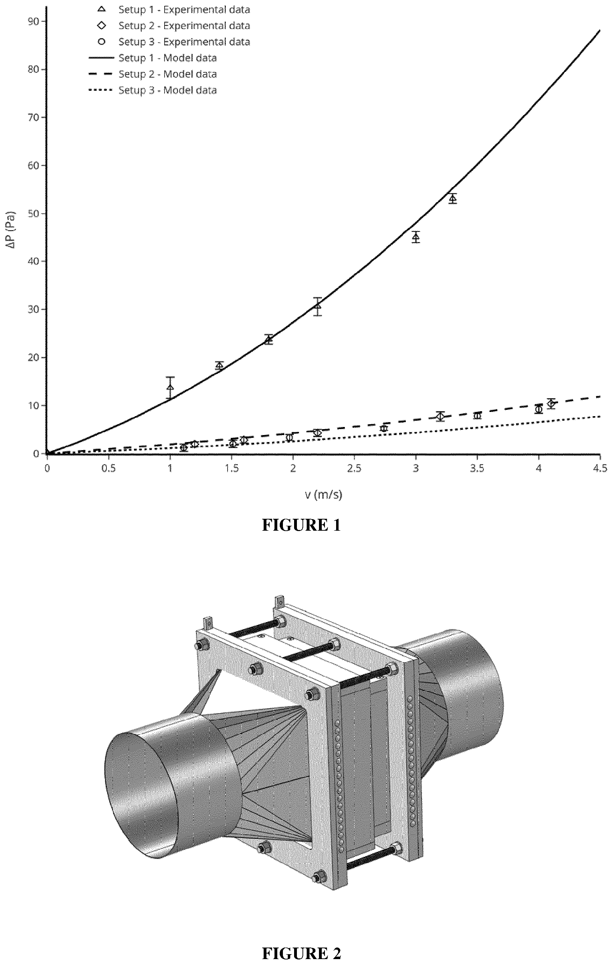

In 2019 Roegiers et al. in Chemical Engineering Journal, volume 365, pages 80-87 showed that an increase in filter thickness of ACF cloth was found to increase acetaldehyde adsorption, but at the expense of pressure drop, which scaled with filter thickness, illustrating the perceived trade-off in filtering systems between adsorption capacity and pressure drop across the filter medium, the experimental data for pressure drop followed the predictions from Computational Fluid Dynamics (CFD) modelling. It is known from HEPA technology that pleated filters have the advantage that pressure loss can be lowered by increasing the surface area. With pleating, pressure drop is not only generated by the filter medium, but also by viscous drag in the pleat spacings. Here CFD modelling predicted a significantly lower pressure drop for a particular increase in available surface area for adsorption which was borne out experimentally, thereby reducing the trade-off between adsorption and pressure drop. Figure 1 is a graph of pressure drop in Pa against air velocity in m/s for set-up 1 without pleats and set-ups 2 and 3 with pleats.

It is an objective technical problem realized by the regenerable gas filter of the present invention to reduce the power consumption required for regeneration of a pleated filter.

A further advantage of the present invention is the use of such a filter for the purification of air in a Heating, Ventilation and Air Conditioning (HVAC) system.

According to a first aspect of the present invention, a regenerable gas filter is provided, said regenerable gas filter comprising a housing having in-line an entrance and an exit, a pleated activated carbon fibre sheet or tube, each pleat having two substantially rectangular elements, with electrical conductors in the tip of each pleat and further electrical conductors being optionally attached to the ends of said sheet, said conductors being disposed substantially perpendicularly to the gas flow through said housing and said conductors on one side of said pleated sheet being connected to a single central conductor, which in turn was coupled to an electrical DC power source, this being repeated for the conductors on the other side of said pleated sheet, said sheet being stretched over and in electrical contact with said conductors and said pleated sheet or tube being provided with a sealing means to said housing.

According to a second aspect of the present invention said regenerable gas filter is used for the purification of air in a Heating, Ventilation and Air Conditioning (HVAC) system.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 is a graph of pressure drop, $\Delta P$, in Pa vs air velocity, v, in m/s for set-up 1 without pleats and set-ups 2 and 3 with pleats.

Fig. 2 shows an overview of the ACF-filter test set-up.

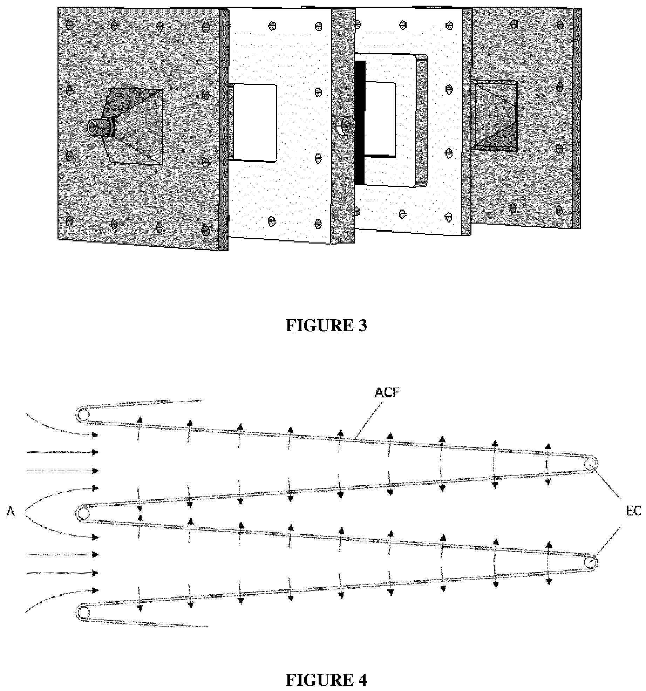

Fig. 3 shows a set-up for an ACF-sheet without pleats.

Fig. 4 shows schematically the ACF-sheet stretched over five conductors forming five pleats, indicating the direction of airflow, A, and equipotential conductors, EC.

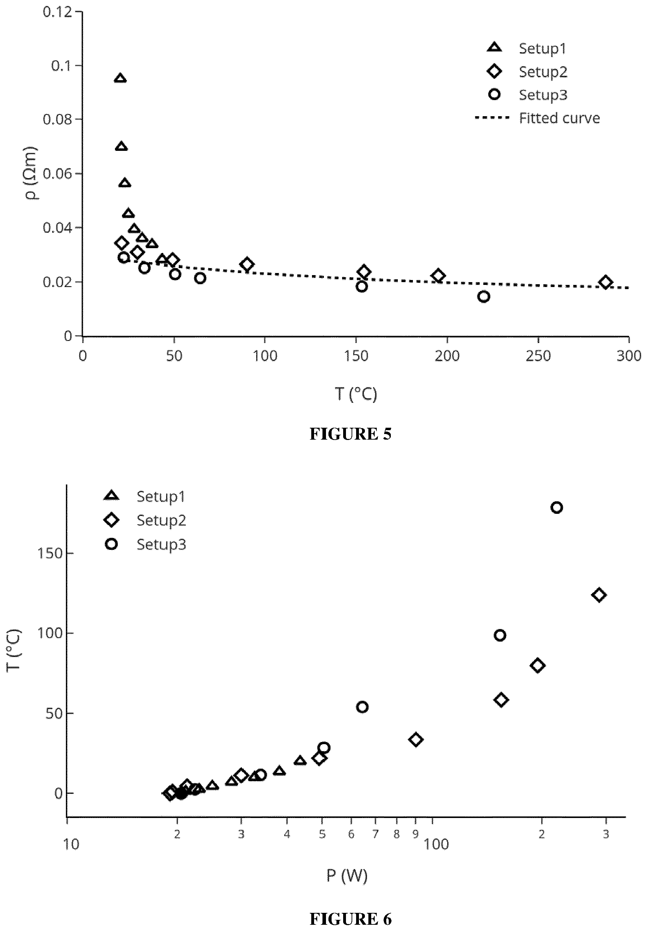

Fig. 5 is a graph of electrical resistivity, p, vs ACF filter temperature, T: experimental data and fitted curve

Fig. 6 is a graph of ACF filter temperature, T, in °C against electrical power, P, in W for reference set-up 1 and invention set-ups 2 and 3.

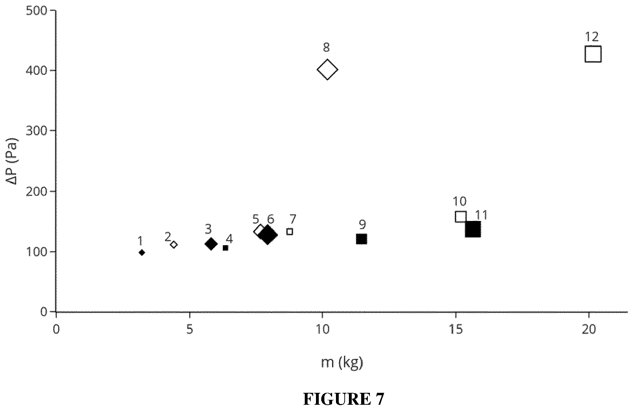

Fig. 7 is a graph of pressure drop, $\Delta P$ vs adsorbent mass i.e. ACF sheet, m, in kg for different filter thicknesses (symbol size: small = 0.5mm, medium = 1 mm, large = 1.5 mm), different pleat heights (symbol fill: empty = 2.76 mm, filled = 3.90 mm) and different pleat lengths (symbol shape: square = 0.6 m; diamond = 0.3 m)

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

Definitions

ACF, as used in disclosing the present invention, is an abbreviation of activated carbon fibre, which is a microporous activated carbon material with a fibre shape and a well-defined porous structure.

A pleated activated carbon fibre tube, as used in disclosing the present invention, is a pleated activated carbon fibre continuous sheet without ends, which may be cylindrical in shape.

A non-end pleat, as used in disclosing the present invention, has two elements, which are each part of two pleats each having a conductor at its tip, an element being the substantially rectangular part of ACF sheet between two of the conductors, see Figure 4.

An end pleat, as used in disclosing the present invention, has two elements with a conductor at the tip thereof with an element between two conductors, which is also part of the adjacent pleat non-end pleat, and a second element between the conductor at the tip of the end pleat and the end of the ACF sheet, see Figure 4.

The term element, as used in disclosing the present invention, is, in the case of an ACF tube, that part between conductors in the tips of adjacent pleats and, in the case of an ACF sheet, that part between conductors in the tips of adjacent pleats and that part between the end of the sheet and the conductor in the tip of the adjacent end pleat. The dimensions of these elements may be the same or different.

ACFC, as used in disclosing the present invention, is an abbreviation of activated carbon fibre cloth.

ACFF, as used in disclosing the present invention, is an abbreviation of activated carbon fibre felt.

PCO, as used in disclosing the present invention, is an abbreviation of photocatalytic oxidation.

VOC, as used in disclosing the present invention, is an abbreviation of volatile organic compound.

HVAC, as used in disclosing the present invention, is an abbreviation of Heating, Ventilation and Air Conditioning.

The expression "in electrical contact with", as used in disclosing the present invention, means that the tension of the ACF sheet or tube stretched over the conductors is sufficient to provide optimal electrical contact. The tension force required, for example, with a woven 0.5 mm thick ACF sheet is 38 $Nm^{-1}$ and can be determined at constant voltage by measuring the current between two conductors upon applying different weights to one end of the ACF sheet.

The expression 'further conductor", as used in disclosing the present invention, only refers to the conductors optionally attached to one or both ends of the ACF sheet and is thereby distinguished from the conductors at the tips of the pleats.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

Regenerable gas filter

According to a first aspect of the present invention, a regenerable gas filter is provided, said regenerable gas filter comprising a housing having in-line an entrance and an exit, a pleated activated carbon fibre (ACF) sheet or tube, each pleat having two substantially rectangular elements, with electrical conductors in the tip of each pleat and further electrical conductors being optionally attached to the ends of said sheet, said conductors being disposed substantially perpendicularly to the gas flow through said housing and said conductors on one side of said pleated sheet being connected to a single central conductor, which in turn was coupled to an electrical DC power source, this being repeated for the conductors on the other side of said pleated sheet, said sheet being stretched over and in electrical contact with said conductors and said pleated sheet or tube being provided with a sealing means to said housing.

According to a preferred embodiment of the first aspect of the present invention, the gas is polluted air.

According to another preferred embodiment of the first aspect of the present invention, the activated carbon fibre sheet or tube is woven i.e. an activated carbon fibre cloth (ACFC).

According to yet another preferred embodiment of the first aspect of the present invention, the activated carbon fibre sheet or tube is non-woven i.e. an activated carbon fibre felt (ACFF).

According to yet another preferred embodiment of the first aspect of the present invention, the sealing means is a rubber sealing means.

With a pleated ACF tube the number of pleats, conductors and electrically-active elements is identical, whereas with a pleated ACF sheet the number of pleats and conductors is identical, but in the absence of further conductors there is one less electrically-active element to which one electrically active element is to be added for each optional further conductor.

The use of a pleated activated carbon fibre (ACF) sheet or tube results in a lower pressure drop at a given air velocity and a reduced dependence of pressure drop with increasing air velocity compared with a planar filter, as shown in Figure 1. In the case of the pleated filter of setup 2, a drastic reduction in pressure drop was observed, the air flow velocity was reduced due to the increase in cross-sectional filter section, and the pressure drop in accordance with Darcy's law. The pleat height is relatively high, which makes the influence of viscous drag negligible. The same trend was observed in setup 3. However, the pressure-velocity curves of setups 2 and 3 are similar to each other, suggesting that viscous effects have an impact on the total pressure drop in setup 3. The optimal number of pleats corresponds to the lowest pressure drop and the highest sheet surface area. The height of the pleat is determined by the cross-sectional area of the conductor: a cross-sectional area of 6 $mm^2$ corresponds to a rod diameter of 2.76 mm and hence a minimum pleat height of 2.76 mm, that of 12 $mm^2$ to a rod diameter of 3.91 mm and hence a minimum pleat height of 3.91 mm.

The conductors must be rigid enough to withstand the tensional force required to obtain optimal contact between the ACF sheet and the conductors, with steel conductors being preferred. According to yet another preferred embodiment of the first aspect of the present invention, the conductors have a cross-sectional area of at least 6 $mm^2$.

To obtain the maximum contact breadth of the conductor with the ACF-material, the part of the conductor in contact with the ACF sheet should preferably have some curvature, with rods being particularly preferred. According to yet another preferred embodiment of the first aspect of the present invention, the conductors are rods. Rods combine maximum strength for a given cross-sectional area with curvature with steel rods being preferred.

The maximum number of pleats with conductors with a cross-sectional area of 6 $mm^2$ (diameter 2.75 mm) and the elements stacked horizontally is 307 pleats/m. This provides a maximum current of 52A, whereas a typical current is 1A.

The optimum operating conditions in respect of the number of pleats and the pleat height is determined by the flow conditions, there being a trade-off between the pressure drop and the amount of contaminant adsorbed. Set-up 2 has 7 pleats over 185 mm or 37.8 pleats/m and Set-up 3 has 14 pleats over 185 mm or 75.7 pleats/m.

According to yet another preferred embodiment of the first aspect of the present invention, the housing segment accommodating said pleated activated carbon fibre sheet or tube is cylindrical.

According to yet another preferred embodiment of the present invention, the housing segment accommodating said pleated activated carbon fibre sheet or tube has a rectangular profile.

Use of the regenerable gas filter

According to a second aspect of the present invention, said regenerable gas filter is used for the purification of air in a Heating, Ventilation and Air Conditioning (HVAC) system.

According to a preferred embodiment of the second aspect of the present invention, the ACF sheet or tube is regenerated by resistively heating the elements of the pleated ACF tube or sheet between said conductors.

According to another preferred embodiment of the second aspect of the present invention, the ACF sheet is regenerated by resistively heating the elements of the pleated ACF sheet between the conductors and resistively heating the elements between the adjacent conductors and the further conductors attached to the ends of the ACF sheet.

According to a yet another preferred embodiment of the second aspect of the present invention, the Heating, Ventilation and Air Conditioning (HVAC) system comprises the combination of photocatalytic oxidation (PCO) and activated carbon fibre (ACF) units in a hybrid system.

EXAMPLES

The filter device in the examples is shown in Figure 2. The airflow entered the device through a 160mm diameter duct, which then expanded to a rectangular compartment (185mm x 185mm) that contained the FM10 ACF sheet and at the end it is reduced back to a 160mm diameter outlet duct. A system with threaded rods and nuts made it possible to alter the distance between the two sides of conductors, i.e. elongating the device in the direction of the air flow. This way, the ACF sheet could be stretched out to a maximum, by tightening the nuts, forming perfectly shaped pleats and assure good contact with the conductors.

The performance of three experimental set-ups was evaluated. The characteristics of these arrangements are summarised in Table 1 below.

Table 1:

|  | Set-up 1 | Set-up 2 | Set-up 3 |
|---|---|---|---|
|  | Reference | Invention | Invention |
| Number of pleats | none | 7 | 14 |
| Number of conductors | 0 | 7 | 14 |
| Number of further conductors | 0 | 0 | 0 |
| Number of elements | 0 | 8 (6 electrically active) | 15 (13 electrically active) |
| Element height [mm] | - | 111 | 112 |
| Element width [mm] | - | 185 | 185 |
| SFCC surface area [m$^2$] | 0.034 | 0.164 | 0.311 |
| Adsorbent mass of ethanal [g] | 4.454 | 21.484 | 40.741 |

In set-up 1 the ACFC cloth was stretched across the 185 x 185 mm$^2$ opening and electrical contact was made at either end with brass electrodes, as described by Roegiers et al. in 2019 in Chemical Engineering Journal, volume 365, pages 80-87. In set-ups 2 and 3, according to the present invention, the pleats mentioned in Table 1 for these set-ups were formed by stretching the ACFC cloth over steel conductors (cross-sectional area 12 mm$^2$) as shown schematically for five pleats in Figure 4, the conductors on each side of the pleated sheet being connected to a single central conductor, which in turn was coupled to an electrical DC power source (Delta Elekronika, 0-35V/0-45A). Thus, when a voltage was applied over the ACF sheet (FM10, Calgon Corp.), the electrical current was uniformly distributed over each element in the pleated sheet (with 1 element representing a plane ACF strip between two conductors), similar to an electrical circuit with parallel resistances.

According to Ohm's law, the electrical current flowing through the entire pleated ACF sheet can be calculated as:

$$I = \frac{V}{R_{par}} ; \ R_{par} = \left( \sum_i^n \frac{1}{R_{sheet,i}} \right)^{-1} \quad \ldots\ldots\ldots\ldots\ldots\ldots\ldots\ldots\ldots(1)$$

With $R_{par}$ the parallel electrical resistance ($\Omega$), $R_{sheet,i}$ the electrical resistance of an individual pleat of ACF ($\Omega$), i.e. one planar ACF element between two conductors, and $n$ the total number of ACF elements in the filter device. Based on the assumption that the electrical current is uniformly distributed and that the resistance of each ACF element is identical, theoretically:

$$R_{par} = \frac{R_{sheet,i}}{n} \quad \ldots\ldots\ldots\ldots\ldots\ldots\ldots\ldots\ldots\ldots\ldots\ldots\ldots\ldots\ldots\ldots(2)$$

Furthermore, the electrical resistance can be described as:

$$R_{sheet,i} = \frac{\rho_e}{t}\frac{l}{w} \quad \dots\dots\dots\dots\dots\dots\dots\dots\dots\dots\dots \quad (3)$$

Wherein, $\rho_e$ represents the electrical resistivity ($\Omega$m), $l$ the width of the ACF pleat (m), i.e. the distance from conductor to conductor, t the sheet thickness and w the breadth of that part of the ACF sheet in direct contact with the conductor. The electrical resistivity is in turn a temperature dependent property, often described as:

$$\frac{\rho_e}{\rho_0} = \exp\left(\alpha_0\left(\frac{1}{T}-\frac{1}{T_0}\right)\right) \quad \dots\dots\dots\dots\dots\dots\dots\dots\dots\dots\dots(4)$$

In which $\rho_0$ is the electrical resistivity ($\Omega$m) at temperature $T_0$ (K), $T$ is the average temperature of the ACF sheet (K) and $\alpha_0$ is the thermal coefficient at temperature $T_0$ (K). If the values of $\rho_0$ and $\alpha_0$ can be determined, it is possible to calculate the total resistance of the ACF sheet $R_{par}$ and hence the electrical power required to heat the ACF sheet to a certain temperature for regeneration purposes. The values of $\rho_0$ and $\alpha_0$ were determined by measuring the surface temperature of the ACF sheet with a thermocouple (TC Direct, Type K), in setups with different element heights and by varying the voltage and DC current.

The thermo-electric properties of pleated ACF sheets were investigated for the three setups listed in Table 1. The goal was to derive the electrical resistivity of the ACF sheet in order to estimate the ACF sheet temperature when a particular electrical power is supplied. Therefore, voltages ranging from 0 to 25V were applied to all setups and from the amperage, the total resistance $R_{par}$ was determined, according to equation 1. Equations 2 and 3 were then used to determine the electrical resistivity and the results for all setups are shown in Fig 5. The results for Set-up1 are limited to the low temperature range because $R_{par}$ is relatively high in the absence of a pleated structure, in accordance with equation 2. Thus, the power supplied was limited, as well as the maximum achievable sheet temperature. Moreover, a steep drop in electrical resistivity was observed as the sheet temperature increased. Set-ups 2 and 3 show a very similar, slightly decreasing trend as a function of temperature. The temperature was kept under 300°C to prevent ACF sheet deterioration. Equation 4 was fitted to the data in Figure 5 by a least square objective function, resulting in values of 0.0281 and 272.32 for $\rho_0$ and $\alpha_0$ respectively. The resulting fit is also shown in Figure 5. It is notable that the electrical resistivity is underestimated by equation 4 at ambient temperatures. However, regeneration temperatures below 100°C are often irrelevant, especially in the case of apolar VOCs, which require higher desorption temperatures. Figure 6 shows the required electrical power to heat the ACF sheet to the desired temperature, for all three investigated filter setups. The x-axis is displayed as a log-scale to give a better visual representation. At temperatures lower than 50°C, all set-ups require equal electrical power to heat up to the same temperature. As the electrical power input increased, the surface temperature of the ACF sheet rose exponentially and therefore, a small power shift could drastically change the temperature. This can be explained by that fact that convective heat transfer rate differs between the set-ups due to the different pleat heights. From a practical point of view, manually fixing the surface temperature is a difficult task and should ideally be controlled by a surface temperature sensor and a PID-controller.

It is clear from Figure 6 that set-ups 2 and 3, according to the present invention, enable higher desorption temperatures to be realized and that a lower pleat height enables higher sheet temperatures to be realised for a given electrical power.

Figure 1 shows experimental data for the dependence of pressure drop, $\Delta$P, in Pa upon air velocity, v, in m/s for set-ups 1, 2 and 3 together with model data obtained using the CFD model. The air stream was simulated as an incompressible flow with the 'Free and Porous Media Flow' physics interface in COMSOL 5.5. The filter was defined as a porous medium with permeability $\kappa$=2.71×10$^{-10}$ m$^2$ and Forchheimer drag $\beta$=64798 m$^{-1}$, determined in previous work [Roegiers et al. in Chemical Engineering Journal, volume 365, pages 80-87 (2019)]. The solution for the pressure drop was extracted by simultaneously solving the mass continuity equation, the governing equations for the free flow ($k$-$\varepsilon$-turbulent model) and the equations for flow in porous media:

$$\rho\nabla(\mathbf{u}) = 0 \quad \dots\dots\dots\dots\dots\dots\dots\dots\dots\dots\dots\dots\dots.(5)$$

$$\rho(\mathbf{u}\cdot\nabla)\mathbf{u} = \nabla\cdot\left(-p\mathbf{I} + (\mu+\mu_T)(\nabla\mathbf{u}+(\nabla\mathbf{u})^T)\right) \quad \dots\dots\dots\dots.(6)$$

$$\frac{\rho}{\epsilon_p}\left((\mathbf{u}\cdot\nabla)\frac{\mathbf{u}}{\epsilon_p}\right) = \nabla\cdot\left(-p\mathbf{I} + \frac{\mu}{\epsilon_p}\left(\nabla\mathbf{u} + (\nabla\mathbf{u})^T\right) - \frac{2\mu}{3\epsilon_p}(\nabla\cdot\mathbf{u})I\right) - \left(\mu\kappa^{-1} + \beta|\mathbf{u}|\right)\mathbf{u}$$

...(7)

wherein $\rho$ represents the air density (1.2041 kg/m$^3$), $\mathbf{u}$ the velocity vector (m/s), $\mathbf{I}$ the identity matrix, $p$ the pressure (Pa), $\mu$ the dynamic viscosity (Pa·s) and $\mu_T$ the eddy viscosity (Pa·s), derived by the k-$\varepsilon$ turbulence model. A parametric sweep of velocity inputs was performed ranging from 0 to 4.5 m/s with 0.1 m/s intervals in order to obtain a smooth pressure-velocity curve in the same range as the experimental pressure-velocity curves.

The good fits with the CFD model means that the CFD model can be used to perform a sensitivity analysis of the pressure drop with respect to filter thickness (0.5, 1.0 and 1.5mm), pleat height (2.76 mm and 3.90 mm, corresponding to typical conductor dimensions of 6 mm$^2$ and 12 mm$^2$ respectively) and length of the filter module (0.3m and 0.6m), each of the twelve configurations containing a maximum number of pleats (so the elements are stacked horizontally), but the number of pleats differing due to variations in filter thickness and conductor diameter. The characteristics of the twelve configurations are given in Table 2 below:

Table 2:

| Configuration number | Filter thickness [mm] (symbol size) | Number of pleats | Pleat height [mm] (symbol filling) | Pleat length [m] (symbol shape) |
|---|---|---|---|---|
| 1 | 0.5 (small) | 136 | 3.90 mm (filled) | 0.3 m (diamond) |
| 2 | 0.5 (small) | 184 | 2.76 mm (empty) | 0.3 m (diamond) |
| 3 | 1.0 (medium) | 122 | 3.90 mm (filled) | 0.3 m (diamond) |
| 4 | 0.5 (small) | 136 | 3.90 mm (filled) | 0.6 m (square) |
| 5 | 1.0 (medium) | 159 | 2.76 mm (empty) | 0.3 m (diamond) |
| 6 | 1.5 (large) | 111 | 3.90 mm (filled) | 0.3 m (diamond) |
| 7 | 0.5 (small) | 184 | 2.76 mm (empty) | 0.6 m (square) |
| 8 | 1.5 (large) | 140 | 2.76 mm (empty) | 0.3 m (diamond) |
| 9 | 1.0 (medium) | 122 | 3.90 mm (filled) | 0.6 m (square) |
| 10 | 1.0 (medium) | 159 | 2.76 mm (empty) | 0.6 m (square) |
| 11 | 1.5 (large) | 111 | 3.90 mm (filled) | 0.6 m (square) |
| 12 | 1.5 (large) | 140 | 2.76 mm (empty) | 0.6 m (square) |

The pressure drop, $\Delta$P vs adsorbent mass i.e. of ACF sheet in kg was studied to find an optimal number of pleats, for a flow rate of 2.5 m/s and is shown in Figure 7. A filter thickness of 1.5 mm in combination with a low pleat height causes a tremendous increase in pressure drop, as in the case for configuration 8 and 12. This is to be expected since the flow is first subject to high viscous stress in the small pleat channels and subsequently, it needs to permeate the thick porous layer. Both phenomena contribute to a significant amount of energy loss.

On the other hand, configuration 12 contains the most activated carbon of all tested setups. Remarkably, the remaining configurations all show a similar pressure drop of 100-150 Pa, while the amount of adsorbent mass is highly divergent. In general terms, it is more profitable to increase the length of the device, as this means more adsorbent mass while retaining more or less the same pressure drop. This can be explained by the fact that an increase in pressure drop is expected in elongated pleats due to more viscous drag, but also a counteracting decrease in pressure drop because of a higher filter surface area and thus a lower facial velocity. Obviously, continuously elongating the filter device is restricted by practical limitations and requires a high electrical power consumption for regeneration purposes. The same reasoning holds when analyzing the pleat height. For example, when configurations 10 and 11 are compared, a similar pressure drop is observed. Configuration 10 has a pleat of height of 2.76 mm, while configuration 11 has a pleat height of 3.9 mm. Thus, configuration 10 is subject to higher viscous drag, but due to a thinner filter layer of 1mm, the pressure drop is very similar to setup 11 with a filter thickness of 1.5 mm. Moreover, Configuration 10 contains more pleats within the same volume, but the pleats contain less activated carbon per pleat, resulting in a similar amount of activated carbon. The best choice of filter configuration depends on the application and customer needs. One can argue that configuration 12 is favorable because it has the highest amount of activated carbon per unit of volume. But one can also argue that configuration 11 is more favorable because it decreases the pressure drop by 67.9%, while losing only 22.4% of adsorbent mass.

At a flow rate of 2.5 m/s configuration 11 provides the best performance, but if the filter is required to have a maximum adsorbent mass in a given volume, regardless of the pressure drop, configuration 12 is the best. Configuration 1 is best, if pressure drop is a big issue. However, a different outcome is possible at different face velocities. There is therefore no particular optimal configuration, there always being a trade-off between pressure drop and adsorbent mass and user demands.

It is to be understood that although preferred embodiments, specific constructions and configurations, as well as materials, have been discussed herein for devices according to the present invention, various changes or modifications in form and detail may be made without departing from the scope and spirit of this invention.

**Claims**

1. A regenerable gas filter comprising a housing having in-line an entrance and an exit, a pleated activated carbon fibre sheet or tube, each pleat having two substantially rectangular elements, with electrical conductors in the tip of each pleat and further electrical conductors being optionally attached to the ends of said sheet, said conductors being disposed substantially perpendicularly to the gas flow through said housing and said conductors on one side of said pleated sheet being connected to a single central conductor, which in turn was coupled to an electrical DC power source, this being repeated for the conductors on the other side of said pleated sheet, said sheet being stretched over and in electrical contact with said conductors and said pleated sheet or tube being provided with a sealing means to said housing.

2. The regenerable gas filter according to claim 1, wherein said gas is polluted air.

3. The regenerable gas filter according to claim 1 or 2, wherein said sheet or tube is woven.

4. The regenerable gas filter according to claim 1 or 2, wherein said sheet or tube is non-woven.

5. The regenerable gas filter according to any one of claims 1 to 4, wherein said housing comprises a housing segment accommodating said pleated activated carbon fibre sheet or tube.

6. The regenerable gas filter according to claim 5, wherein said housing segment accommodating said pleated activated carbon fibre sheet or tube is cylindrical.

7. The regenerable gas filter according to claim 5, wherein said housing segment accommodating said pleated activated carbon fibre sheet or tube has a rectangular profile.

8. The regenerable gas filter according to any one of clams 1 to 7, wherein said conductors are rods.

9. The use of a regenerable gas filter according to any one of claims 1 to 8, for the purification of air in a Heating, Ventilation and Air Conditioning (HVAC) system.

10. The use according to claim 9, wherein said ACF sheet or tube is regenerated by resistively heating said elements of said pleated ACF tube or sheet between said conductors.

11. The use according to claim 8 or 9, wherein said ACF sheet is regenerated by resistively heating said elements of said pleated ACF sheet between said conductors and resistively heating said elements between said conductors and the further conductors attached to the ends of said ACF sheet.

12. The use according to any one of claims 9 to 11, wherein said Heating, Ventilation and Air Conditioning (HVAC) system comprises the combination of photocatalytic oxidation (PCO) and activated carbon fibre (ACF) units in a hybrid system.

**FIGURE 1**

**FIGURE 2**

**FIGURE 3**

**FIGURE 4**

**FIGURE 5**

**FIGURE 6**

**FIGURE 7**

Europäisches
Patentamt

European
Patent Office

Office européen
des brevets

## EUROPEAN SEARCH REPORT

Application Number

EP 20 19 3505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/170435 A1 (JOANNOU CONSTANTINOS J [CA]) 21 November 2002 (2002-11-21) | 1-12 | INV. B01D53/04 |
| Y | * see, in particular, figures 1, 2,3, 3A, 4 and 6; see also claims 1-15 and paragraphs [0015], [0026], [0027] ; see table at paragraph [0044] * | 1-12 | |
| X | EP 1 305 103 A2 (3M INNOVATIVE PROPERTIES CO [US]) 2 May 2003 (2003-05-02) | 1-12 | |
| Y | * see, in particular, figure 2, items 12, 14 and 8 * | 1-12 | |
| Y | DAVID L. JOHNSEN ET AL: "Control of Electrothermal Heating during Regeneration of Activated Carbon Fiber Cloth", ENVIRONMENTAL SCIENCE & TECHNOLOGY, vol. 45, no. 2, 15 January 2011 (2011-01-15), pages 738-743, XP055755719, US ISSN: 0013-936X, DOI: 10.1021/es103303f * see, in particular, figures 2, 3, 4 and 5 as well as table 2 * | 1-12 | |
| Y | LINGAI LUO ET AL: "Adsorption and electrothermal desorption of organic vapors using activated carbon adsorbents with novel morphologies", CARBON, vol. 44, no. 13, 1 November 2006 (2006-11-01), pages 2715-2723, XP055755773, GB ISSN: 0008-6223, DOI: 10.1016/j.carbon.2006.04.007 * see, in particular, figure 3C and figure 7 as well as point 3.4; see pressure drop at figure 4 * | 1-12 | TECHNICAL FIELDS SEARCHED (IPC)<br><br>B01D |

-/--

The present search report has been drawn up for all claims

| Place of search | Date of completion of the search | Examiner |
|---|---|---|
| Munich | 2 December 2020 | Rumbo, Angel |

EPO FORM 1503 03.82 (P04C01)

Europäisches
Patentamt

European
Patent Office

Office européen
des brevets

# EUROPEAN SEARCH REPORT

Application Number

EP 20 19 3505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | A. SUBRENAT ET AL: "Electrical behaviour of activated carbon cloth heated by the joule effect: desorption application", CARBON, vol. 39, no. 5, 1 April 2001 (2001-04-01), pages 707-716, XP055755855, GB ISSN: 0008-6223, DOI: 10.1016/S0008-6223(00)00177-9 * see, in particular, figures 1, 4, 5, 6, 7, 8, 9, 10 and tables 3,4 * | 1-12 | |
| A | DE 195 13 376 A1 (GEWERK KERAMCHEMIE [DE]) 10 October 1996 (1996-10-10) * see in particular figure 1, elements 1, 14, 11 and 12 * | 1-12 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| Munich | 2 December 2020 | Rumbo, Angel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 19 3505

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2020

| Patent document cited in search report | | Publication date | Patent family member(s) | | Publication date |
|---|---|---|---|---|---|
| US 2002170435 | A1 | 21-11-2002 | AU 2002328719 A1 | | 19-04-2004 |
| | | | CA 2520848 A1 | | 08-04-2004 |
| | | | US 2002170435 A1 | | 21-11-2002 |
| | | | WO 2004028698 A2 | | 08-04-2004 |
| EP 1305103 | A2 | 02-05-2003 | AT 340010 T | | 15-10-2006 |
| | | | DE 60123253 T2 | | 10-05-2007 |
| | | | EP 1305103 A2 | | 02-05-2003 |
| | | | JP 2004526928 A | | 02-09-2004 |
| | | | KR 20030051607 A | | 25-06-2003 |
| | | | TW 491728 B | | 21-06-2002 |
| | | | US 6454834 B1 | | 24-09-2002 |
| | | | WO 0209847 A2 | | 07-02-2002 |
| DE 19513376 | A1 | 10-10-1996 | NONE | | |

**Patent documents cited in the description**

- WO 2017140967 A1

**Non-patent literature cited in the description**

- **SUBREMAT et al.** *Carbon,* vol. 39, 707-716
- **YAO et al.** *Journal of the Air & Waste Management Association,* 2009, vol. 59, 31-36
- **ROEGIERS et al.** *Chemical Engineering Journal,* 2019, vol. 365, 80-87